# EUROPÄISCHE PATENTSCHRIFT

(11) **EP 1 614 945 B1**
(45) Veröffentlichungstag und Bekanntmachung des Hinweises auf die Patenterteilung: **19.03.2008**
(21) Anmeldenummer: 05011824.9
(22) Anmeldetag: 01.06.2005
(51) Int. Cl.: F16K 15/02, F16K 17/04

(54) **Rückschlagventil**
Check valve
Clapet de non retour

(30) Priorität: 08.07.2004 DE 102004033022
(43) Veröffentlichungstag der Anmeldung: 11.01.2006
(73) Patentinhaber: Schaeffler KG, 91074 Herzogenaurach (DE)
(72) Erfinder: Koch, Reinhard, 96193 Wachenroth (DE); Fuhrmann, Rainer, 91344 Waischenfeld / Nankendorf (DE); Degenhardt, Christian, 38678 Clausthal-Zellerfeld (DE); Stange, Bernd, 37520 Osterode (DE)
(74) Vertreter: Blaumeier, Jörg

(56) Entgegenhaltungen:
- EP-A- 0 485 335
- FR-A- 2 659 412
- US-A- 1 959 644
- US-A- 3 871 175
- US-A- 3 913 615

## Beschreibung

### Gebiet der Erfindung

Die Erfindung betrifft ein Rückschlagventil umfassend ein Gehäuse mit einer Einlass- und einer Auslassöffnung, mit einem darin vom Gehäuse umschlossen angeordneten käfigartigen Einsatz zur Auflagerung eines Federelements und zur Führung eines gegen das Federelement bewegbaren Schließkörpers, der zwischen einer ersten Endlage, in der er dichtend an einem Dichtsitz anliegt, und einer zweiten Endlage, in der das Ventil vollständig geöffnet ist, bewegbar ist.

### Hintergrund der Erfindung

Ein solches Rückschlagventil kommt überall dort zum Einsatz, wo Flüssigkeiten in eine Richtung gegen Durchfluss gesperrt werden müssen. Solche Ventile werden beispielsweise in Motoren verwendet, wo sie in den Ölkreislauf geschaltet sind, gemäß US 3,871,175.

Ein bekanntes Rückschlagventil (siehe z.B. US 3,913,615, FR 2 659 412) umfasst ein Gehäuse, in das die Flüssigkeit ein- und austreten kann. Im Gehäuseinneren ist ein käfigartiger Einsatz, häufig nach Art eines Dreibeins ausgeführt, der ein Auflager für ein Federelement, in der Regel eine Spiralfeder aufweist, die mittig und achsparallel im Ventilgehäuse angeordnet ist, und die den Schließkörper in Form einer Metallkugel gegen den Dichtsitz im Bereich der Einlassöffnung drängt. Bei hinreichend hohem, an der Einlassöffnung anliegenden Druck wird die Kugel gegen die Rückstellkraft der Feder bewegt, so dass sich das Ventil öffnet, wobei der Öffnungsgrad abhängig vom anliegenden hydraulischen Druck bzw. Durchfluss ist. Wie beschrieben ist die Kugel an dem käfigartigen Einsatz, der in der Regel drei achsparallele Führungsflächen hat, geführt. Aufgrund ihrer Form liegt die Kugel nur mit einer sehr kleinen Fläche an den Führungsflächen des Einsatzes an. Die Führungsflächen sind zur Gewährleistung eines hohen Durchflussquerschnitts relativ schmal bemessen, so dass eine gewisse radiale Bewegung möglich ist.

### Zusammenfassung der Erfindung

Der Erfindung liegt das Problem zugrunde, ein Rückschlagventil anzugeben, das im Betrieb nicht zu dynamischen Schwingungen des Schließkörpers neigt und ein definiertes Öffnen und Schließen des Ventils zulässt.

Zur Lösung dieses Problems ist bei einem Rückschlagventil der eingangs genannten Art erfindungsgemäß vorgesehen, dass der zylindrisch und topfartig oder plattenförmig ausgebildete Schließkörper mit seiner Zylindermantelfläche an dem käfigartigen Einsatz geführt ist und mit einer vorzugsweise ebenen Fläche am Dichtsitz anliegt.

Der Schließkörper ist nach einer ersten Ausführungsalternative vorteilhaft zylindertopfartig ausgeführt, also als dünnwandiges Bauteil konzipiert, das im Vergleich zu einer Kugel, die aus Vollmaterial gearbeitet ist, wesentlich weniger Masse besitzt. Das heißt, zum Öffnen und Schließen ist wesentlich weniger Masse zu bewegen, so dass dies schneller und definiert vonstatten gehen kann. Der Schließkörper ist mit seinem Zylinderabschnitt an dem käfigartigen Einsatz geführt, wobei die Führungs- oder Anlagefläche relativ groß und abhängig von der Länge des Zylinderabschnitts ist. Aufgrund der geringen Masse ist ein sehr schnelles Öffnen und Schließen des Ventils möglich. Aufgrund der exakten und stabilen Führung des Schließkörpers werden radiale Schwingungen des Schließkörpers deutlich reduziert.

Die Dichtfunktion ist erfindungsgemäß mittels topfartigen Schließkörper realisiert, welcher mit der ebenen Außenfläche im Bereich seines Bodens großflächig am Dichtsitz anliegt, mithin also eine große Dichtfläche realisiert ist, anders als bei einer Kugel, bei der formbedingt nur ein relativ schmaler ringförmiger Anlagebereich am Dichtsitz realisiert ist.

Ein weiterer beachtlicher Vorteil des Einsatzes eines topfartigen Schließkörpers liegt darin, dass die Feder an der Innenseite des Bodens des Schließkörpers angreift. Bei gleicher Gehäuselänge im Vergleich einer Kugelausführung ist also die Federlänge bei dem erfindungsgemäßen Rückschlagventil wesentlich größer. Dies ermöglicht es, entweder das Gehäuse zu verkürzen, und eine Feder mit ähnlicher Länge, wie sie bei einer Kugelausführungsform verwendet wird, einzusetzen, so dass der gesamte Bauraum des Rückschlagventils hierdurch verringert werden kann. Alternativ besteht die Möglichkeit, unterschiedlich ausgelegte Federn je nach Anwendungsfall zu integrieren, nachdem aufgrund der beachtlichen Federlänge hinreichende Variationsmöglichkeiten über Anpassung an die Betriebsbedingungen gegeben sind. Ein weiterer beachtlicher Vorteil der Verwendung des topfartigen Schließelements liegt darin, dass, nachdem die Feder wie beschrieben im Topfinneren am Boden angreift, keine Verkippung während der Schließkörperbewegung möglich ist, anders als bei einer Kugel, die über die Feder von hinten gestützt ist.

Alternativ zur topfartigen Form kann der Schließkörper auch als massive, zylindrische Platte ausgebildet sein, die in entsprechender Weise mit der Zylindermantelfläche am Einsatz geführt ist. Auch mit dieser Ausführung werden die genannten zentralen Vorteile erzielt.

Eine besonders zweckmäßige Weiterbildung der Erfindung sieht vor, die Bodenfläche des Schließkörpers gleich welcher Ausführung mit einer Verformung zu versehen, über die das Federelement, das wie beschrieben als Spiralfeder ausgeführt ist, zentriert wird. Diese Verformung hält also das Federelement in der mittigen, achsparallelen Position. Dabei kann die Verformung entweder eine zum Inneren des Schließkörpers weisende Sicke oder eine nach außen weisende Wölbung sein.

Zur Vergrößerung des Durchgangsquerschnitts im Bereich des Schließkörpers ist es möglich, den Zylinderabschnitt des topfartigen Schließkörpers ein- oder mehrfach zu schlitzen, wobei die Schlitze achsparallel oder auch schräg zur Achse verlaufen können. Über diese Schlitze kann bei Öffnen des topfartigen Schließkörpers das Fluid bereits im Bereich des Zylinderabschnitts nach innen strömen, so dass insgesamt der Durchgangsquerschnitt und damit die beim Öffnen förderbare Flüssigkeitsmenge vergrößert werden kann. Dem trägt auch das Merkmal Rechnung, das freie Ende des Zylinderabschnitts des topfartigen Schließkörpers etwas nach innen zu biegen, wobei dies sowohl für einen Schließkörper mit geschlossenem Zylinderabschnitt als auch für einen Schließkörper mit geschlitztem Zylinderabschnitt gilt.

Um am Ventil eine Drosselfunktion zu realisieren, kann der Schließkörper eine Durchbrechung zur Ermöglichung eines gedrosselten Rückflusses des zurückströmenden Mediums aufweisen. Ferner kann zur Verringerung des Durchflussquerschnitts das Gehäuse im Bereich der Einlass- und/oder der Auslassöffnung nach innen zur Ventilmittelachse gezogen sein, wodurch ebenfalls eine Drosselfunktion erzielt werden kann. Schließlich kann auch der käfigartige Einsatz in zur Auslassöffnung weisenden Bereich mit einer dem Durchflussquerschnitt beeinflussenden Durchbrechung versehen sein.

Der Schließkörper selbst ist zweckmäßigerweise aus Metall, insbesondere aus einem, im Falle eines topfartigen Schließkörpers vorzugsweise tiefgezogenen Blechteil gebildet. Dies ermöglicht zum einen eine hinreichend leichte, gleichermaßen aber auch sehr stabile Ausführung. Ein solcher Schließkörper ist gegen hohe Temperaturen beständig und unempfindlich gegen die üblichen Durchströmmedien, gleichermaßen kann er kostengünstig hergestellt werden. Neben dem Schließkörper selbst kann natürlich auch der käfigartige Einsatz und das Gehäuse selbst aus Metall sein, so dass sich insgesamt eine komplette Metallausführung ergibt. Alternativ zur metallischen Ausführungsform des Schließkörpers kann dieser auch aus Kunststoff gefertigt sein, wobei die Wahl des verwendeten Kunststoffs gegebenenfalls abhängig vom Einsatzzweck ist. Denn je nachdem muss gegebenenfalls eine hohe Temperaturbeständigkeit wie auch eine Unempfindlichkeit gegen gegebenenfalls aggressive Durchströmmedien gegeben sein. Auch bei dieser Ausführungsform besteht die Möglichkeit, den käfigartigen Einsatz und das Gehäuse ebenfalls aus Kunststoff zu fertigen. Es sind also beliebige Materialkombinationen möglich, die Materialauswahl ist den Erfordernissen angepasst vorzunehmen.

### Kurze Beschreibung der Zeichnungen

Weitere Vorteile und Einzelheiten der Erfindung werden anhand von bevorzugten Ausführungsbeispielen unter Bezugnahme auf die Figuren erläutert. Die Figuren sind schematische Darstellungen und zeigen:
- Fig. 1: eine Explosionszeichnung des erfindungsgemäßen Rückschlagventils, teilweise im Schnitt, und
- Fig.2: eine Schnittansicht des zusammengesetzten Rückschlagventils.

### Detaillierte Beschreibung der Zeichnungen

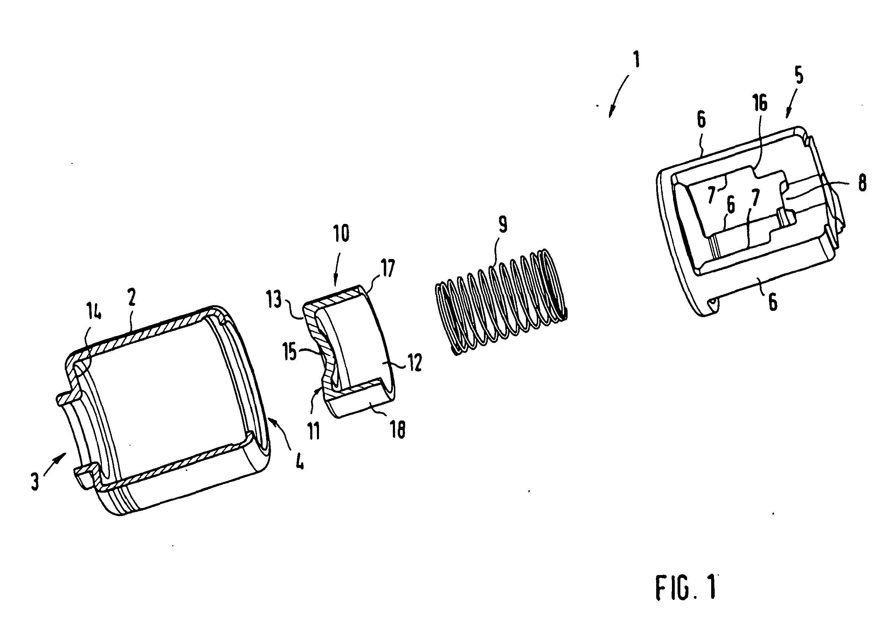

Fig. 1 zeigt das erfindungsgemäße Rückschlagventil 1 in Form einer Explosionsdarstellung. Gezeigt ist ein hier geschnitten dargestelltes Gehäuse 2, bevorzugt aus Metall, mit einer Einlassöffnung 3 und einer Auslassöffnung 4, welches Gehäuse in den Fluidkreislauf geschalten wird. Im Inneren des Gehäuses wird ein käfigartiger Einsatz 5 angeordnet, der bevorzugt aus Kunststoff gefertigt ist. Er ist nach Art eines Dreibeins ausgeführt und besitzt drei Führungsabschnitte 6, die in der Einbaustellung mit ihren Führungsflächen 7 achsparallel liegen. Anstelle eines Dreibeins sind auch zwei- oder mehrbeinige Käfigausführungen denkbar. Zwischen den Führungsabschnitten 6 ist der Durchlassraum für das Fluid. Ferner ist ein Auflager 8 für das Federelement 9, hier eine Spiralfeder, am Einsatz 5 vorgesehen, der gleichzeitig der Zentrierung des Federelements 9 dient. Ferner ist ein Schließkörper 10 vorgesehen, der im Inneren des Einsatzes 5 bewegbar ist. Er ist topfartig und zylindrisch ausgeführt und besitzt einen Boden 11 sowie einen davon abstehenden Zylinderabschnitt 12. Am Boden 11 ist eine ebene Dichtfläche 13 realisiert, die mit einer ebenen Dichtfläche 14 am Gehäuse 2, die einen Dichtsitz bildet, in der Schließstellung zusammenwirkt. Hierüber ist eine flächige Anlagedichtung realisiert. Der Boden 11 ist ferner mit einer Verformung 15 in Form einer Sicke versehen, die der Zentrierung des Federelements 9, das an der Innenseite des Bodens 11 angreift, dient.

Der Zylinderabschnitt 12 ist kürzer bemessen als die Führungsflächen 7 am Einsatz 5 bis zum dort vorgesehenen Anschlag 16, an dem der Schließkörper 10 mit seiner Stirnkante 17 am Zylinderabschnitt 12 in der geöffneten Endposition anschlägt, lang sind. Über die Zylindermantelfläche 18 liegt der Zylinderabschnitt 12 an den Führungsflächen 7 der Führungsabschnitte 6 des Einsatzes 5 an bzw. ist über diese Zylindermantelfläche 18 an den Führungsflächen 7 geführt. Der Schließkörper 10 liegt also über eine relativ große Fläche bzw. eine beachtliche Länge an dem jeweiligen Führungsabschnitt 7 an.

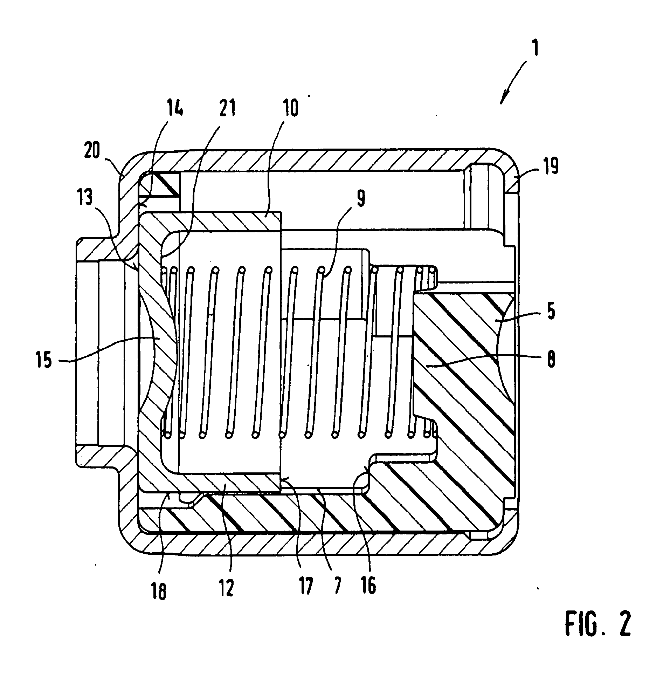

Fig. 2 zeigt das erfindungsgemäße Rückschlagventil 1 in der Zusammenbaustellung. Das Federelement 9 ist wie beschrieben am Auflager 8 des Einsatzes 5, der am Gehäuseboden 19 und an der gegenüberliegenden Gehäusewand 20 fixiert ist, aufgelagert. Mit dem anderen Ende liegt das Federelement 9 an der Innenseite 21 des Bodens 11 des Schließkörpers 10 an. Dieser wird also im Bereich seines plattenförmigen Bodens gestützt. Ersichtlich zentriert die Verformung 15 das Federelement 9 und hält es in einer achsparallelen Stellung.

Aufgrund der großflächigen Führung des Zylindermantels 18 an den Führungsflächen 7 wird zum einen eine radiale Bewegung verhindert, in Verbindung mit der bodenseitigen Auflagerung des Federelements 9 wird auch ein Verkippen verhindert. Eine exakte Führung des Schließkörpers 10, der bevorzugt aus einem tiefgezogenen Blechteil besteht und folglich eine sehr geringe Masse aufweist, zwischen den beiden Endstellungen, die über die Anlage der Dichtfläche 13 an der Dichtfläche 14 (Ventil zu) sowie dem Anschlag der Stirnkante 17 am Anschlag 16 (Ventil offen) definiert sind, ermöglicht ein sehr schnelles und definiertes Bewegen des Schließkörpers zwischen den beiden Endlagen ohne der Gefahr dynamischer Schwingungen realisiert werden.

Ersichtlich ist die Federlänge beachtlich groß, nachdem die Feder quasi im Topfinneren anliegt. Es besteht die Möglichkeit, die Gehäuselänge - gegebenenfalls in Verbindung mit einer Verkürzung der axialen Länge des Zylinderabschnitts - zu verkürzen und so den gesamten Einbauraum zu verringern.

Alternativ zur Ausführung der Verformung 15 als nach innen gerichtete Sicke besteht die Möglichkeit, die Verformung als nach außen gerichtete Wölbung zu realisieren, auch in diesem Fall wäre eine Zentrierfunktion gegeben. Weiterhin besteht die Möglichkeit, den Zylinderabschnitt 12 mit Schlitzen zu versehen, die achsparallel oder schräg dazu verlaufen können, um den Durchflussquerschnitt zu vergrößern. Schließlich besteht die Möglichkeit, zu diesem Zweck auch das freie Ende des Zylinderabschnitts, also den Bereich der Stirnkante 17 nach innen in das Topfinnere zu biegen, um so den Flüssigkeitszustrom zur Auslassöffnung 4 zu erleichtern.

Ferner ist es möglich, anstelle des topfartigen Schließkörpers einen zylindrischen plattenartigen Schließkörper, der gegebenenfalls mit einer zentrierenden Sicke versehen ist, einzusetzen, der auch mit seiner infolge der massiven Ausführung etwas kürzer bemessenen Zylindermantelfläche am käfigartigen Einsatz geführt ist.

### Bezugszahlen

- 1: Rückschlagventil
- 2: Gehäuse
- 3: Einlassöffnung
- 4: Auslassöffnung
- 5: Einsatz
- 6: Führungsabschnitte
- 7: Führungsflächen
- 8: Auflager
- 9: Federelement
- 10: Schließkörper
- 11: Boden
- 12: Zylinderabschnitt
- 13: Dichtfläche
- 14: Dichtfläche
- 15: Verformung
- 16: Anschlag
- 17: Stirnkante
- 18: Zylindermantelfläche
- 19: Gehäuseboden
- 20: Gehäusewand
- 21: Innenseite

## Patentansprüche

1. Rückschlagventil umfassend ein Gehäuse (2) mit einer Einlass- (3) und einer Auslassöffnung (4), it einem darin vom Gehäuse umschlossen angeordneten käfigartigen Einsatz (5) zur Auflagerung eines Federelements (9) und zur Führung eines gegen das Federelement (9) bewegbaren Schließkörpers (10), der zwischen einer ersten Endlage, in der er dichtend an einem Dichtsitz (14) anliegt, und einer zweiten Endlage, in der das Ventil vollständig geöffnet ist, bewegbar ist, **dadurch gekennzeichnet, dass** der zylindrisch und topfartig ausgebildete Schließkörper (10) mit seiner Zylindermantelfläche (18) an dem käfigartigen Einsatz (5) geführt ist und mit einer ebenen Außenfläche (13) am Dichtsitz (14) anliegt.

2. Rückschlagventil nach Anspruch 1, **dadurch gekennzeichnet, dass** die Bodenfläche (11) des Schließkörpers (10) eine das Federelement (9) zentrierende Verformung (15) aufweist.

3. Rückschlagventil nach Anspruch 2, **dadurch gekennzeichnet, dass** die Verformung (15) eine zum Inneren des Schließkörpers (10) weisende Sicke oder eine nach Außen weisende Wölbung ist.

4. Rückschlagventil nach einem der vorangehenden Ansprüche, **dadurch gekennzeichnet, dass** der Zylinderabschnitt (12) des topfartigen Schließkörpers (10) geschlossen, ein- oder mehrfach geschlitzt ist.

5. Rückschlagventil nach einem der vorangehenden Ansprüche, **dadurch gekennzeichnet, dass** das freie Ende des Zylinderabschnitts (12) des topfartigen Schließkörpers (10) nach innen gebogen ist.

6. Rückschlagventil nach einem der vorangehenden Ansprüche, **dadurch gekennzeichnet, dass** am Schließkörper (10) eine Durchbrechung zur Ermöglichung eines gedrosselten Durchflusses auch bei geschlossenem Ventil vorgesehen ist.

7. Rückschlagventil nach einem der vorangehenden Ansprüche, **dadurch gekennzeichnet, dass** das Gehäuse (2) zur Verringerung des Durchlassquerschnitts im Bereich der Einlass- und/oder der Auslassöffnung (3, 4) nach innen zur Ventilmittelachse gezogen ist.

8. Rückschlagventil nach einem der vorangehenden Ansprüche, **dadurch gekennzeichnet, dass** der käfigartige Einsatz (5) im zur Auslassöffnung (4) weisenden Bereich mit einer den Durchlassquerschnitt vergrößernden Durchbrechung versehen ist.

9. Rückschlagventil nach einem der vorangehenden Ansprüche, **dadurch gekennzeichnet, dass** der Schließkörper (10) aus Metall, insbesondere ein vorzugsweise tiefgezogenes Blechteil ist.

10. Rückschlagventil nach Anspruch 9, **dadurch gekennzeichnet, dass** auch der käfigartige Einsatz (5) und das Gehäuse (2) aus Metall sind.

11. Rückschlagventil nach einem der Ansprüche 1 bis 8, **dadurch gekennzeichnet, dass** der Schließkörper (10) aus Kunststoff ist.

12. Rückschlagventil nach Anspruch 11, **dadurch gekennzeichnet, dass** auch der käfigartige Einsatz (5) und das Gehäuse (2) aus Kunststoff sind.

## Claims

1. Check valve comprising a housing (2) with an inlet aperture (3) and an outlet aperture (4), having a cage-like insert (5) disposed therein and enclosed by the housing for the mounting of a spring element (9) and for guiding a closing body (10) movable against the spring element (9), the closing body being movable between a first end position in which it abuts a sealing seat (14) in a sealing-tight manner and a second end position in which the valve is fully open, **characterised in that** the cylindrical and pot-shaped closing body (10) is guided with its cylinder casing (18) on the cage-like insert (5) and abuts the sealing seat (14) with a plane outer face (13).

2. Check valve according to claim 1, **characterised in that** the base face (11) of the closing body (10) has a deformation (15) which centres the spring element (9).

3. Check valve according to claim 2, **characterised in that** the deformation (15) is a bead facing the interior of the closing body (10) or is an outward-facing convexity.

4. Check valve according to one of the preceding claims, **characterised in that** the cylindrical section (12) of the pot-like closing body (10) is closed, or slotted in one or more places.

5. Check valve according to one of the preceding claims, **characterised in that** the free end of the cylindrical section (12) of the pot-like closing body (10) is curved inward.

6. Check valve according to one of the preceding claims, **characterised in that** on the closing body (10) a perforation is provided to permit a choked through-flow even with the valve closed.

7. Check valve according to one of the preceding claims, **characterised in that** the housing (2) is drawn inward towards the valve central axis in order to reduce the through-flow cross-section in the region of the inlet aperture and/or outlet aperture (3, 4).

8. Check valve according to one of the preceding claims, **characterised in that** the cage-like insert (5) is provided in the region facing the outlet aperture (4) with a perforation which enlarges the through-flow cross-section.

9. Check valve according to one of the preceding claims, **characterised in that** the closing body (10) is composed of metal, in particular a preferably deep-drawn sheet-metal part.

10. Check valve according to claim 9, **characterised in that** the cage-like insert (5) and the housing (2) are also composed of metal.

11. Check valve according to one of claims 1 to 8, **characterised in that** the **closing body (10) is composed of plastics material.**

12. Check valve according to claim 11, **characterised in that** the cage-like insert (5) and the housing (2) are also composed of plastics material.

## Revendications

1. Clapet de non-retour comportant un boîtier (2) avec une ouverture d'admission (3) et une ouverture de sortie (4), avec un élément intérieur (5) en forme de cage, qui est agencé dans le boîtier en étant entouré par celui-ci et qui est destiné à supporter un élément de ressort (9) et à guider un corps de fermeture (10), pouvant être déplacé à l'encontre de l'élément de ressort et pouvant être déplacé entre une première position finale, dans laquelle il est en appui étanche contre un siège d'étanchéité (14), et une deuxième position finale, dans laquelle le clapet est entièrement ouvert, **caractérisé en ce que** le corps de fermeture (10) cylindrique, réalisé en forme de godet, est guidé avec sa paroi latérale cylindrique (18) sur l'élément intérieur (5) en forme de cage et est en appui avec une surface extérieure (13) plane contre le siège d'étanchéité (14).

2. Clapet de non-retour selon la revendication 1, **caractérisé en ce que** la surface du fond (11) du corps de fermeture (10) comporte une déformation (15) qui est destinée à centrer l'élément de ressort (9).

3. Clapet de non-retour selon la revendication 2, **caractérisé en ce que** la déformation (15) est une concavité orientée vers l'intérieur du corps de fermeture (10) ou une convexité orientée vers l'extérieur.

4. Clapet de non-retour selon l'une quelconque des revendications précédentes, **caractérisé en ce que** la partie cylindrique (12) du corps de fermeture (10) en forme de godet est fermée, est munie d'une ou de plusieurs fentes.

5. Clapet de non-retour selon l'une quelconque des revendications précédentes, **caractérisé en ce que** l'extrémité libre de la partie cylindrique (12) du corps de fermeture (10) en forme de godet est pliée vers l'intérieur.

6. Clapet de non-retour selon l'une quelconque des revendications précédentes, **caractérisé en ce que** sur le corps de fermeture (10) est prévu un trou débouchant permettant un flux ralenti même lorsque le clapet est fermé.

7. Clapet de non-retour selon l'une quelconque des revendications précédentes, **caractérisé en ce que** le boîtier (2), dans la zone de l'ouverture d'admission (3) et/ou de l'ouverture de sortie (4), est tiré vers l'intérieur vers l'axe médian du clapet, en vue de réduire la section de passage du flux.

8. Clapet de non-retour selon l'une quelconque des revendications précédentes, **caractérisé en ce que** l'élément intérieur (5) en forme de cage, dans la zone orientée vers l'ouverture de sortie (4), est muni d'un trou débouchant agrandissant la section de passage du flux.

9. Clapet de non-retour selon l'une quelconque des revendications précédentes, **caractérisé en ce que** le corps de fermeture (10) est réalisé en métal, en particulier dans une tôle de préférence emboutie.

10. Clapet de non-retour selon la revendication 9, **caractérisé en ce que** l'élément intérieur (5) en forme de cage et le boîtier (2) sont également réalisés en métal.

11. Clapet de non-retour selon l'une quelconque des revendications 1 à 8, **caractérisé en ce que** le corps de fermeture (10) est réalisé en matière plastique.

12. Clapet de non-retour selon la revendication 11, **caractérisé en ce que** l'élément intérieur (5) en forme de cage et le boîtier (2) sont également réalisés en matière plastique.
